# EUROPÄISCHE PATENTANMELDUNG

(11) **EP 2 149 519 A1**
(43) Veröffentlichungstag der Anmeldung: **03.02.2010**
(21) Anmeldenummer: 09162933.7
(22) Anmeldetag: 17.06.2009
(51) Int. Cl.: B65G 59/04, B65H 3/08, B65H 3/48

(54) **Verfahren und Vorrichtung zum Abheben eines Stirndeckels von einem Stirndeckelstapel**

(30) Priorität: 29.07.2008 DE 102008040824
(71) Anmelder: Voith Patent GmbH, 89522 Heidenheim (DE)
(72) Erfinder: Nelles, Josef, 52224 Stolberg (DE); Riens, Volker, 47443 Moers (DE); Stitz, Hermann Albert, 51515 Kürten (DE)

(57) **Zusammenfassung**

Die Erfindung betrifft ein Verfahren zum Abheben eines Stirndeckels (2 ) von einem Stirndeckelstapel (3), bei welchem Verfahren wenigstens zwei mit mehreren Saugnäpfen (6) versehene an einem Halter (4) befestigte und verfahrbare Greifer (5.1, 5.2 ) zunächst auf den Stirndeckelstapel (3) aufgesetzt werden, die Saugnäpfe (6) danach mit Unterdruck beaufschlagt werden, die Greifer (5.1, 5.2) sodann aufeinanderzubewegt werden, wodurch sie den Stirndeckel (2) zwischen sich aufwölben, und der Stirndeckel (2) schließlich mittels der Greifer (5.1, 5.2) vom Stirndeckelstapel (3) abgehoben wird.

Dabei möchte man sicherstellen, daß immer nur ein einzelner Stirndeckel vom Stapel abgenommen wird.

Hierzu wird beim Anheben des Stirndeckels (2) ein Fluid zwischen den Stirndeckel (2) und Stirndeckelstapel (3) geblasen.

Weiterhin betrifft die Erfindung eine Vorrichtung (1) zur Durchführung des Verfahrens.

## Beschreibung

Die Erfindung betrifft ein Verfahren zum Abheben eines Stirndeckels von einem Stirndeckelstapel, bei dem wenigstens zwei mit mehreren Saugnäpfen versehene an einem Halter befestigte und verfahrbare Greifer zunächst auf den Stirndeckelstapel aufgesetzt werden, die Saugnäpfe danach mit Unterdruck beaufschlagt werden, die Greifer sodann aufeinanderzubewegt werden, wodurch sie den Stirndeckel zwischen sich aufwölben, und der Stirndeckel schließlich mittels der Greifer vom Stirndeckelstapel abgehoben wird. Weiterhin betrifft sie eine Vorrichtung zur Durchführung des Verfahrens nach dem Oberbegriff des Anspruchs 6.

Die Erfindung wird nachstehend im Zusammenhang mit dem Verpacken einer Papierrolle, d.h. einer Rolle aus einer aufgewickelten Papier- oder Kartonbahn, beschrieben. Sie ist aber bei auch vergleichbaren Rollen, die verpackt werden sollen, anwendbar.

In einem der letzten Herstellungsschritte werden Papier- und Kartonbahnen auf die gewünschte Breite geschnitten und anschließend zu Rollen aufgewickelt. Diese Rollen haben üblicherweise einen Durchmesser im Bereich zwischen 0,5 und 3 m und eine Länge im Bereich von 0, 3 und 5 m. Das Gewicht derartiger Rollen bewegt sich zwischen einigen hundert Kilogramm und einigen Tonnen. Nach der Produktion dieser Rollen müssen derartige Rollen verpackt werden, um während eines Transportes oder während einer Lagerung vor Beschädigungen durch äußere Einflüsse geschützt zu sein.

In einem weit verbreiteten Verpackungsverfahren wird daher zunächst jeweils ein sogenannter Innenstirndeckel an die Stirnseiten der Rolle angelegt. Dieser Innendeckel muß passend zum Durchmesser der Rolle gewählt werden, d.h. sein Durchmesser muß etwas kleiner sein als der Durchmesser der Rolle. Danach wird die Umfangsfläche der Rolle mit einer Verpackungsbahn umgeben, beispielsweise mit Packpapier, und zwar mit einem axialen Überstand im Bereich von 250 bis 350 mm je Stirnseite. Dieser axiale Überstand wird auf die jeweilige Stirnseiten bzw. die dort befindlichen Innenstirndeckel umgebördelt. Danach wird auf jede Stirnseite noch ein sogenannter Außenstirndeckel aufgeklebt. Auch der Außenstirndeckel muß passend zum Durchmesser der Rolle gewählt werden. Diese regelmäßig aus Papier- oder Pappe bestehenden und biegsamen Innen- bzw. Außenstirndeckel, für die im folgenden einfachheitshalber der Begriff "Stirndeckel" benutzt wird, sind stapelförmig aufeinander gelagert und werden von einem Roboter mit Greifvorrichtung jeweils einzeln von den jeweiligen Stapeln abgenommen und an die Stirnseiten der Rolle angelegt. Dabei ergibt sich das Problem, daß oft nicht nur der jeweils oberste Stirndeckel abgehoben wird, sondern auch der darunterliegende, der dann neben dem Stapel abfällt und manuell entsorgt werden muß, was zu teilweise erheblichen Produktionsunterbrechungen führt, weil die Anlage für derartige Entsorgungsfälle vorübergehend stillgestellt werden muß, da der gesamte Roboterbereich während des laufenden Betriebs nicht vom Personal betreten werden darf.

Zur Lösung dieses Problems ist in DE 197 17 947 A1 eine Anlage vorgesehen, die wenigstens einen sich zumindest teilweise oberhalb des Stirndeckelstapels erstreckenden Halter aufweist, der sich auf dem Außenumfang des Stapels abstützt, wobei der oder die Halter beim Abheben des obersten Stirndeckels den darunter liegenden Deckel an seinem Platz halten. Jedem der Stirndeckelstapel muß mindestens ein solcher Halter zugeordnet sein, was dazu führt, daß jeweils soviel Halter vorzuhalten sind, als es Stapel gibt, und daß die Stapel stets eigens mit entsprechenden Haltern bestückt werden müssen.

Der Erfindung liegt die Aufgabe zugrunde, ein Verfahren und eine Vorrichtung der eingangs erwähnten Arten so weiterzubilden, daß vorgenannten Problemen vermieden werden.

Diese Aufgabe wird erfindungsgemäß bei einem Verfahren der eingangs genannten Art dadurch gelöst, daß beim Abheben des Stirndeckels ein Fluid zwischen den Stirndeckel und Stirndeckelstapel geblasen wird. Die Aufgabe wird bei einer Vorrichtung der eingangs genannten Art dadurch gelöst, daß am Außenumfang der Greifer Düsen angeordnet sind, deren Austrittsöffnungen im wesentlichen in der Ebene der Saugnäpfe liegen und die zum Zentrum des Stirndeckelstapels ausgerichtet sind.

Vorteilhafte Weiterbildungen ergeben sich aus den Unteransprüchen.

Beim Einsatz der erfindungsgemäßen Abhebevorrichtung werden die beiden Greifer auf zunächst in bekannter Weise auf den Deckelstapel aufgesetzt. Sodann werden die Saugnäpfe mit Unterdruck beaufschlagt. Danach fahren die Greifer aufeinander zu, wodurch der oberste Stirndeckel zusammengeschoben wird und sich zwischen den beiden Greifern aufwölbt. Vorzugsweise blasen nunmehr zwei Düsen aus einer ersten Reihe Düsen von beiden Seiten horizontal Luft in den durch die Aufwölbung entstandenen "Kanal" zwischen dem obersten Stirndeckel und dem unmittelbar darunterliegenden ein. Dadurch wird hier ein Staudruck erzeugt, der das Abheben des obersten Stirndeckels unterstützt. Sobald dieser oberste Stirndeckel angehoben worden ist, können die restlichen Düsen der ersten Düsenreihe aktiviert werden, die dann Luft in den Raum zwischen dem abgehobenen Stirndeckel und den Stirndeckelstapel blasen. Im wesentlichen gleichzeitig können zweite Düsen aktiviert werden. Die von ihnen ausgehenden Luftströme können in einem zur Vertikalen geneigten Winkel im Randbereich des Stirndeckelstapels auf diesen auf auftreffen und werden von dort aus gegen die Unterseite des abgehobenen Stirndeckels umgelenkt, was sich zusätzlich positiv auf den Abhebevorgang auswirkt.

Vorzugsweise ist eine Steuerung/Regelung vorgesehen, die die Geschwindigkeit, mit der die Luft aus den Düsen austritt, dem Gewicht der abzuhebenden Stirndeckel anpasst.

Die erfindungsgemäße Vorrichtung hat Vorteil, daß sie ohne einen jeweils separat auf den Stirndeckelstapel aufzulegenden Halter, wie ihn DE 197 17 947 A1 zeigt, auskommt und in jedem Fall sicherstellt, daß jeweils nur ein einziger Stirndeckel abgehoben wird.

Die Erfindung wird im folgenden anhand eines bevorzugten Ausführungsbeispiels in Verbindung mit Zeichnungen beschrieben. Hierin zeigen:
- Fig. 1: einen Stirndeckelstapel mit der erfindungsgemäßen Stirndeckelabhebevorrichtung in perspektivischer Darstellung und
- Fig. 2: einen Ausschnitt aus Fig 1.

Von der dargestellten Ausführungsform kann aber in vielfacher Hinsicht abgewichen werden, ohne daß der Grundgedanken der Erfindung verlassen wird.

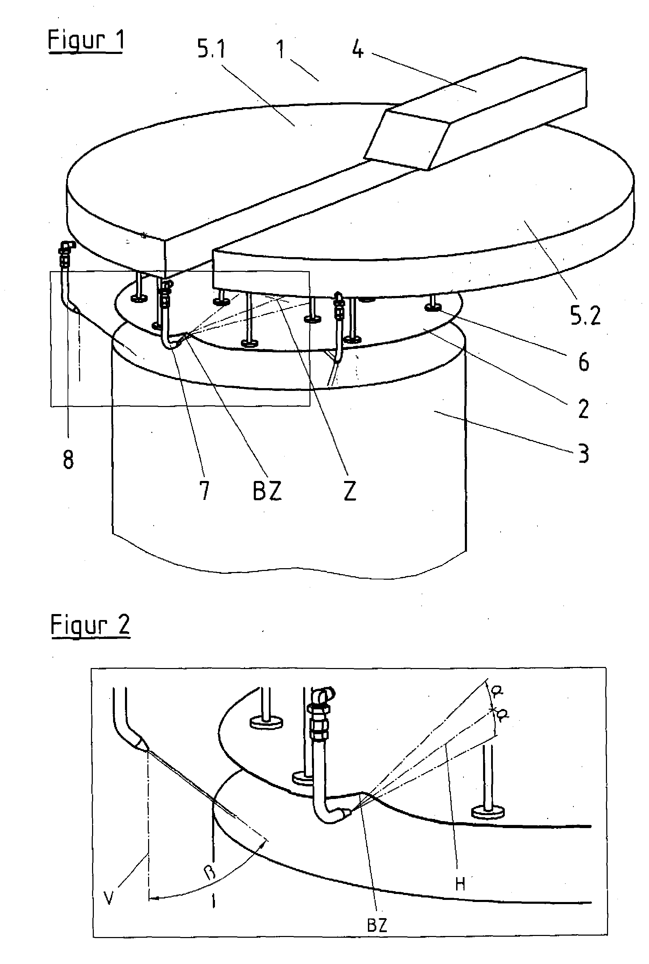

Fig. 1 zeigt eine Vorrichtung 1 zum Abheben jeweils eines Stirndeckels 2 von einem Stirndeckelstapel 3. Die Vorrichtung 1 besteht aus einem Halter 4, an dem zwei Greifer 5.1, 5.2 befestigt sind, die aufeinander zu- bzw. voneinander fortbewegt werden können. Auf der dem Stirndeckelstapel 3 zugewandten Seite der beiden Greifern 5.1, 5.2 sind Saugnäpfe 6 angebracht, die nach der bekannten Unterdrucktechnik arbeiten. Die Saugnäpfe 6 sind in im wesentlichen gleichen Abständen derart angeordnet, daß sie den abzuhebenden Stirndeckel 2 auf einer innen liegende Kreisbahn berühren. Zwischen diesen randständigen Saugnäpfen 6 können zusätzliche weitere innen liegende vorgesehen sein. Am Außenumfang der Greifer 5.1, 52 sind ersten Düsen 7 in im wesentlichen gleichen Abständen angebracht. Die Düsen 7 sind so ausgerichtet, daß sie ein Fluid in einem Winkel α von +/- 10° zur Horizontalen und in einer auf das Zentrum des Stirndeckelstapels (3) orientierter Richtung in den Raum zwischen dem abgehobenen Stirndeckel 2 und dem Stirndeckelstapel 3 blasen. Im einfachsten Fall handelt es sich bei dem Fluid um Luft. Zusätzlich zu den Düsen 7 sind am Außenumfang der Greifern 5.1, 5.2 zweite Düsen 8 angeordnet, deren Ausblasöffnung in einem Winkel β von 10° bis 30° zur Vertikalen geneigt ist, so daß die nach Abheben des Stirndeckels 2 aus ihnen austretenden Fluidströme im Randbereich des Stirndeckelstapels 3 auf diesen auftreffen und von dort gegen die Unterseite des abgehobenen Stirndeckels 2 umgelenkt werden. Auch hier handelt es sich bei dem Fluid im einfachsten Fall um Luft. Die Versorgungsleitungen für die Düsen 7, 8 sind nicht dargestellt. Ebenfalls nicht dargestellt ist eine Steuereinheit, mit der die Geschwindigkeit das Fluid, die aus den Düsen 7, 8 austritt, entsprechend dem jeweiligen Gewicht des abzuhebenden Stirndeckels 2 geregelt werden kann.

Fig. 2 zeigt einen vergrößerte Detailansicht aus Fig. 1

### Bezugszeichenliste

- 1: Stirndeckel-Abhebevorrichtung
- 2: Stirndeckel
- 3: Stirndeckelstapel
- 4: Halter
- 5.1, 5.2: Greifer
- 6: Saugnäpfe
- 7: erste Düsen
- 8: zweite Düsen
- α: Winkel
- β: Winkel
- H: Horizontale
- Z: Zentrum des Stirndeckelstapels
- V: Vertikale
- BZ: Aufwölbungsraum

## Patentansprüche

1. Verfahren zum Abheben eines Stirndeckels (2 ) von einem Stirndeckelstapel (3), bei dem wenigstens zwei mit mehreren Saugnäpfen (6) versehene, an einem Halter (4) befestigte und verfahrbare Greifer (5.1, 5.2 ) zunächst auf den Stirndeckelstapel (3) aufgesetzt werden, die Saugnäpfe (6) danach mit Unterdruck beaufschlagt werden, die Greifer (5.1, 5.2) sodann aufeinanderzubewegt werden, wodurch sie den Stirndeckel (2) zwischen sich aufwölben, und der Stirndeckel (2) schließlich mittels der Greifer (5.1, 5.2) vom Stirndeckelstapel (3) abgehoben wird, **dadurch gekennzeichnet, daß** zumindest beim Abheben des Stirndeckels (2) ein Fluid zwischen den Stirndeckel (2) und Stirndeckelstapel (3) geblasen wird.

2. Verfahren nach Anspruch 1, **dadurch gekennzeichnet, daß** das Fluid zu Beginn des Abhebevorgangs in einem Winkel (α) von +/- 10° zur Horizontalen (H) und in einer auf das Zentrum des Stirndeckelstapels (3) orientierten Richtung beidseitig in den durch die Aufwölbung des Stirndeckels (2) entstehenden Raum (BZ) zwischen dem Stirndeckel (2) und dem Stirndeckelstapel (3) geblasen wird.

3. Verfahren nach Anspruch 1 und 2, **dadurch gekennzeichnet, daß** das Fluid nach dem Abheben des Stirndeckels (2) in einem Winkel (α) von +/- 10° zur Horizontalen und in einer auf das Zentrum (Z) des Stirndeckelstapels orientierten Richtung allseitig in den Raum (BZ) zwischen den Stirndeckel (2) und den Stirndeckelstapel (3) geblasen wird.

4. Verfahren nach einem der vorgenannten Ansprüche, **dadurch gekennzeichnet, daß** das Fluid nach dem Abheben des Stirndeckels (2) in einem zur Vertikalen (V) geneigten Winkel (β) von 10° bis 30° auf die Oberseite des Stirndeckelstapels (3) geblasen wird.

5. Verfahren nach einem der vorgenannten, **dadurch gekennzeichnet, daß** die Geschwindigkeit mit der das Fluid ausgeblasen wird, auf das Gewicht und/oder die Größe des Stirndeckels (2) abgestimmt wird.

6. Vorrichtung (1) zum Abheben eines Stirndeckels (2) von einem Stirndeckelstapel (3) mit wenigstens zwei mit mehreren Saugnäpfen (6) versehenen und an einem Halter (4) befestigten und verfahrbaren Greifern (5.1, 5.2 ), **dadurch gekennzeichnet, daß** am Außenumfang der Greifer (5.1, 5.2) erste und zweite Düsen (7, 8) angeordnet sind, deren Austrittsöffnungen im wesentlichen in der Ebene der Saugnäpfe (5) liegen und die zum Zentrum (Z) des Stirndeckelstapels (3) orientiert sind.

7. Vorrichtung nach Anspruch 6, **dadurch gekennzeichnet, daß** die ersten Düsen (7) in einem Winkel (α) von +/- 10° zur Horizontalen ausgerichtet sind.

8. Vorrichtung nach Anspruch 6, **dadurch gekennzeichnet, daß** die zweiten Düsen (8) in einem Winkel (β) von 10° bis 30° zur Vertikalen ausgerichtet sind.

9. Vorrichtung nach einem der Ansprüchen 6 bis 8, **dadurch gekennzeichnet, daß** eine Steuereinheit vorgesehen ist, die die Geschwindigkeit, mit der das Fluid aus den Düsen (7, 8) austritt entsprechend dem jeweiligen Gewicht und/oder der Größe des Stirndeckels (2) regelt.
